# EUROPEAN PATENT APPLICATION

(11) **EP 4 773 357 A1**
(43) Date of publication of application: **08.07.2026**
(21) Application number: 25855741.2
(22) Date of filing: 11.06.2025
(51) Int. Cl.: H01M 50/105

(54) **BATTERY CELL, TERMINAL DEVICE, AND BATTERY CELL PACKAGING METHOD**

(30) Priority: 21.08.2024 CN 202411154393
(71) Applicant: Dongguan Amperex Technology Limited, Dongguan City, Guangdong Province 523000 (CN); Ningde Amperex Technology Limited, Ningde, Fujian 352100 (CN)
(72) Inventor: SHEN, Haijie, Dongguan, Guangdong 523000 (CN)
(74) Representative: Kraus & Lederer PartGmbB
(86) International application number: PCT/CN2025/100489
(87) International publication number: WO 2026/040570

(57) **Abstract**

A battery cell, an electronic device, and a battery cell packaging method are provided. The battery cell includes an electrode assembly, a tab, and a packaging pouch. The tab is connected to one side of the electrode assembly along a first direction. The packaging pouch includes a main portion and a sealing portion. The electrode assembly is disposed in the main portion. The main portion includes a top wall as well as a first wall and a second wall that are connected to two sides of the top wall respectively along a second direction. The sealing portion includes a top seal edge and a side seal edge. The tab extends out from the top seal edge. The side seal edge is connected to the first wall. The packaging pouch is formed by folding and hermetically securing a packaging film along the second wall. Along the second direction, a spacing between the electrode assembly and the first wall is W1, and a spacing between the electrode assembly and the second wall is W2, |W1 - W2| ≤ 30 µm. The third direction is a thickness direction of the electrode assembly. The first direction, the second direction, and the third direction are perpendicular to each other. The battery cell can improve safety performance.

## Description

### TECHNICAL FIELD

This application relates to the technical field of energy storage, and in particular, to a battery cell, an electronic device, and a battery cell packaging method.

### BACKGROUND

During production of a battery cell, a packaging pouch and a gas pouch connected in sequence need to be made from a packaging film. The packaging pouch is used to accommodate the electrode assembly, and the gas pouch is used to store the gas generated during formation due to oxidation and reduction of an electrolyte solution.

During formation, along the direction of gravity, the packaging pouch is located below the gas pouch. The length direction of the electrode assembly (the direction in which a tab extends out from the electrode assembly is defined as the length direction of the electrode assembly) is perpendicular to the direction of gravity. Under the action of gravity, the electrode assembly tends to be offset toward one side of the packaging pouch. After completion of formation, this will cause the electrode assembly to be excessively offset toward one side of the packaging pouch in the width direction of the electrode assembly, resulting in uneven stress on two sides of the packaging pouch. The more intensely stressed side of the packaging pouch is more prone to be damaged under the pressure of the electrode assembly, thereby affecting the safety performance of the battery cell.

### SUMMARY

In view of the above situation, this application provides a battery cell to improve safety performance.

An embodiment of this application provides a battery cell. The battery cell includes an electrode assembly, a tab, and a packaging pouch. The tab is connected to one side of the electrode assembly along a first direction. The packaging pouch includes a main portion and a sealing portion. The electrode assembly is disposed in the main portion. The main portion includes a top wall as well as a first wall and a second wall that are connected to two sides of the top wall respectively along a second direction. The sealing portion includes a top seal edge and a side seal edge. The tab extends out from the top seal edge. The side seal edge is connected to the first wall. The packaging pouch is formed by folding and hermetically securing a packaging film along the second wall. Along the second direction, a spacing between the electrode assembly and the first wall is W1, and a spacing between the electrode assembly and the second wall is W2, satisfying |W1 - W2| ≤ 30 µm. The third direction is a thickness direction of the electrode assembly. The first direction, the second direction, and the third direction are perpendicular to each other.

In the above battery cell, along the second direction, the spacing between the electrode assembly and the first wall is W1, and the spacing between the electrode assembly and the second wall is W2, satisfying |W1 - W2| ≤ 30 µm, thereby reducing the risk of uneven stress on two sides of the packaging pouch caused by an excessive offset of the electrode assembly toward the first wall or second wall in the second direction, and consequently reducing the risk of damaging the more intensely stressed side of the packaging pouch as squeezed by the electrode assembly, and improving the safety performance of the battery cell.

In some embodiments of this application, |W1 - W2| ≤ 20 µm, so as to further reduce the risk of uneven stress on two sides of the packaging pouch caused by the excessive offset of the electrode assembly toward the first wall or the second wall in the second direction. This further reduces the risk of damaging the more intensely stressed side of the packaging pouch as squeezed by the electrode assembly, and further improves the safety performance of the battery cell.

In some embodiments of this application, the main portion further includes a bottom wall. The bottom wall and the top wall are disposed opposite to each other along the first direction. The top wall, the first wall, the bottom wall, and the second wall are sequentially connected to define a space for accommodating the electrode assembly. A spacing between the first wall and the second wall along the second direction is L1, and a spacing between the top wall and the bottom wall along the first direction is L2, satisfying L2/L1 > 1, indicating that the extension lengths of the first wall and the second wall along the first direction are greater than the extension lengths of the top wall and the bottom wall along the second direction. By selecting the side with a longer extension length of the main portion as a fold surface without a seal edge, this application can reduce the space occupied by the whole sealing portion, thereby increasing the energy density of the battery cell.

In some embodiments of this application, along the third direction, a thickness of the battery cell is H, satisfying H ≤ 3 mm, so as to meet the dimension requirements of an ultrathin battery.

In some embodiments of this application, along the third direction, the side seal edge does not extend beyond the main portion, so as to reduce the space waste caused by the side seal edge protruding beyond the main portion in the third direction, and increase the energy density of the battery cell.

In some embodiments of this application, the side seal edge includes a first segment, a second segment, and a first bent segment connected between the first segment and the second segment. An end, away from the first bent segment, of the first segment is connected to the first wall. The second segment and at least a part of the first segment are stacked up along a thickness direction of the side seal edge to reduce the space occupied by the side seal edge in the second direction and increase the sealing area of the side seal edge, thereby increasing the energy density and sealing strength of the battery cell.

In some embodiments of this application, the first segment includes a first extension segment and a second extension segment. The first extension segment is connected between the first wall and the second extension segment. The first wall, the second segment, and the second extension segment are arranged sequentially along the second direction. The second segment and the second extension segment are stacked up along a thickness direction of the side seal edge, so as to further reduce the space occupied by the side seal edge in the second direction and increase the sealing area of the side seal edge, thereby further increasing the energy density and sealing strength of the battery cell.

In some embodiments of this application, the sealing portion further includes a bottom seal edge. The bottom seal edge is connected to the bottom wall. Along the third direction, the bottom seal edge does not extend beyond the main portion, so as to reduce the space waste caused by the bottom seal edge protruding beyond the main portion in the third direction, and increase the energy density of the battery cell.

In some embodiments of this application, the bottom seal edge includes a third segment, a fourth segment, and a second bent segment connected between the third segment and the fourth segment. An end, away from the second bent segment, of the third segment is connected to the bottom wall. The fourth segment and at least a part of the third segment are stacked up along a thickness direction of the bottom seal edge, so as to reduce the space occupied by the bottom seal edge in the first direction and increase the sealing area of the bottom seal edge, thereby increasing the energy density and sealing strength of the battery cell.

In some embodiments of this application, the third segment includes a third extension segment and a fourth extension segment. The third extension segment is connected between the bottom wall and the fourth extension segment. The bottom wall, the fourth segment, and the fourth extension segment are arranged sequentially along the first direction. The fourth segment and the fourth extension segment are stacked up along a thickness direction of the bottom seal edge, so as to further reduce the space occupied by the bottom seal edge in the first direction and increase the sealing area of the bottom seal edge, thereby further increasing the energy density and sealing strength of the battery cell.

An embodiment of this application further provides an electronic device. The electronic device includes the battery cell disclosed in the above embodiment.

In the above battery cell and electronic device, along the second direction, the spacing between the electrode assembly and the first wall is W1, and the spacing between the electrode assembly and the second wall is W2, satisfying |W1 - W2| ≤ 30 µm, thereby reducing the risk of uneven stress on two sides of the packaging pouch caused by an excessive offset of the electrode assembly toward the first wall or second wall in the second direction, and consequently reducing the risk of damaging the more intensely stressed side of the packaging pouch as squeezed by the electrode assembly, and improving the safety performance of the battery cell.

An embodiment of this application further provides a battery cell packaging method. The battery cell packaging method includes the following steps:
providing a pre-formation battery cell, where the pre-formation battery cell includes a pouch, an electrode assembly, and a tab; the pouch includes a packaging pouch and a gas pouch arranged sequentially and communicating with each other along a first direction, the gas pouch is provided with an opening on a side away from the packaging pouch; the electrode assembly is accommodated in the packaging pouch; and the tab is connected to one side, away from the gas pouch, of the electrode assembly and extends out of the packaging pouch along the first direction;
arranging the pre-formation battery cell such that the first direction is identical to a direction of gravity and the packaging pouch is located below the gas pouch;
vacuum-baking the pre-formation battery cell;
injecting an electrolyte solution into the packaging pouch through the opening and the gas pouch;
sealing the opening;
performing formation on the pre-formation battery cell, and performing vacuumization to allow the gas generated during the formation to enter the gas pouch;
heat-sealing a part, contiguous to the gas pouch, of the packaging pouch to form a bottom seal edge; and
cutting away the gas pouch along a boundary between the bottom seal edge and the gas pouch to form the battery cell disclosed in the above embodiment.

In the battery cell packaging method, the tab is connected to a side, away from the gas pouch, of the electrode assembly and extends out of the packaging pouch along the first direction. In placing the pre-formation battery cell, the first direction is the same as the direction of gravity, thereby reducing the risk of uneven stress on the two sides of the packaging pouch caused by an excessive offset of the electrode assembly toward one side of the packaging pouch in the second direction, reducing the risk of damaging the more intensely stressed side of the packaging pouch as squeezed by the electrode assembly, and improving the safety performance of the battery cell.

In some embodiments of this application, the battery cell packaging method further includes the following steps:
spreading out the packaging film, where the packaging film includes a first packaging region and a second packaging region arranged along the second direction, the first packaging region includes a first region and a second region arranged along the first direction, and the second packaging region includes a third region and a fourth region arranged along the first direction;
stamp-forming the spread-out packaging film, where at least one of the first region or the third region is provided with a cavity region for accommodating the electrode assembly, and the second region and the fourth region are provided with a gas pouch cavity for accommodating the gas generated during formation;
placing the electrode assembly in one cavity region, where the tab is connected to one side, away from the second region and the fourth region, of the electrode assembly, and the tab extends out along the first direction;
folding, among the first packaging region and the second packaging region, the one not accommodating the electrode assembly toward the other along a fold edge to form the pouch, where the first region and the third region overlap to form the packaging pouch, the second region and the fourth region overlap to form the gas pouch, and a part, corresponding to the packaging pouch, of the fold edge, forms the second wall;
heat-sealing the packaging pouch on a side opposite to the fold edge along the second direction to form a side seal edge on this side of the packaging pouch;
heat-sealing the packaging pouch on a side from which the tab extends out, so as to form a top seal edge on this side of the packaging pouch; and
providing an opening of the gas pouch on a side away from the packaging pouch, where the packaging film, the electrode assembly, and the tab form the pre-formation battery cell.

In some embodiments of this application, the packaging pouch includes a main portion configured to accommodate the electrode assembly. The side seal edge is connected to the main portion along the second direction. The battery cell packaging method further includes the following steps: folding the side seal edge so that the side seal edge includes a first segment, a second segment, and a first bent segment connected between the first segment and the second segment; an end, away from the first bent segment, of the first segment is connected to the main portion; and the second segment and at least a part of the first segment are stacked up along a thickness direction of the side seal edge. Folding the side seal edge can reduce the space occupied by the side seal edge in the second direction and increase the sealing area of the side seal edge, thereby increasing the energy density and sealing strength of the battery cell.

In some embodiments of this application, the battery cell packaging method further includes the following steps: folding the first segment so that the first segment includes a first extension segment and a second extension segment; the first extension segment is connected between the main portion and the second extension segment; the main portion, the second segment, and the second extension segment are arranged sequentially along the second direction; and the second segment and the second extension segment are stacked up along a thickness direction of the side seal edge. Folding the first segment can further reduce the space occupied by the side seal edge in the second direction and increase the sealing area of the side seal edge, thereby further increasing the energy density and sealing strength of the battery cell.

In some embodiments of this application, the packaging pouch includes a main portion configured to accommodate the electrode assembly. The side seal edge is connected to the main portion along the second direction. The battery cell packaging method further includes the following steps: folding the bottom seal edge so that the bottom seal edge includes a third segment, a fourth segment, and a second bent segment connected between the third segment and the fourth segment; an end, away from the second bent segment, of the third segment is connected to the main portion; and the fourth segment and at least a part of the third segment are stacked up along a thickness direction of the bottom seal edge. Folding the bottom seal edge can reduce the space occupied by the bottom seal edge in the first direction and increase the sealing area of the bottom seal edge, thereby increasing the energy density and sealing strength of the battery cell.

In some embodiments of this application, the battery cell packaging method further includes the following steps: folding the third segment so that the third segment includes a third extension segment and a fourth extension segment; the third extension segment is connected between the main portion and the fourth extension segment; the main portion, the fourth segment, and the fourth extension segment are arranged sequentially along the first direction; and the fourth segment and the fourth extension segment are stacked up along a thickness direction of the bottom seal edge. Folding the third segment can further reduce the space occupied by the bottom seal edge in the first direction and increase the sealing area of the bottom seal edge, thereby increasing the energy density and sealing strength of the battery cell.

### BRIEF DESCRIPTION OF DRAWINGS

FIG. 1 is a schematic structural diagram of a battery cell viewed along a third direction according to an embodiment of this application;
FIG. 2 is a schematic structural diagram of a battery cell with a side seal edge unbent according to an embodiment of this application;
FIG. 3 is a schematic structural diagram of a battery cell with a side seal edge folded once according to an embodiment of this application;
FIG. 4 is a schematic structural diagram of a battery cell with a side seal edge folded twice according to an embodiment of this application;
FIG. 5 is a schematic structural diagram of a battery cell with a bottom seal edge unbent according to an embodiment of this application;
FIG. 6 is a schematic structural diagram of a battery cell with a bottom seal edge folded once according to an embodiment of this application;
FIG. 7 is a schematic structural diagram of a battery cell with a bottom seal edge folded twice according to an embodiment of this application;
FIG. 8 is a schematic structural diagram of a folded corner portion of battery cell according to an embodiment of this application;
FIG. 9 is a schematic structural diagram of a terminal device according to an embodiment of this application;
FIG. 10 is a flowchart of a battery cell packaging method according to an embodiment of this application;
FIG. 11 is a schematic structural diagram of a pre-formation battery cell according to an embodiment of this application; and
FIG. 12 is a schematic structural diagram of a packaging film of a pre-formation battery cell after being spread out as viewed along a first direction according to an embodiment of this application.

**List of reference signs:**

| | |
|---|---|
| battery cell | 100 |
| pre-formation battery cell | 101 |
| electronic device | 200 |
| electrode assembly | 10 |
| tab | 20 |
| packaging pouch | 30 |
| packaging film | 30A |
| first packaging region | 31 |
| first region | 311 |
| second region | 312 |
| third region | 321 |
| fourth region | 322 |
| cavity region | 33 |
| gas pouch cavity | 34 |
| fold edge | 35 |
| main portion | 40 |
| top wall | 41 |
| first wall | 42 |
| second wall | 43 |
| bottom wall | 44 |
| sealing portion | 50 |
| top seal edge | 51 |
| side seal edge | 52 |
| first segment | 521 |
| first extension segment | 521A |
| second extension segment | 521B |
| second segment | 522 |
| first bent segment | 523 |
| bottom seal edge | 53 |
| third segment | 531 |
| third extension segment | 531A |
| fourth extension segment | 531B |
| fourth segment | 532 |
| second bent segment | 533 |
| folded corner portion | 54 |
| pouch | 60 |
| gas pouch | 70 |
| opening | 71 |
| first direction | Z |
| second direction | X |
| third direction | Y |

This application is further described below with reference to the following specific embodiments and the foregoing drawings.

### DETAILED DESCRIPTION

The following describes the technical solutions in the embodiments of this application with reference to the drawings hereto. Evidently, the described embodiments are merely a part of but not all of the embodiments of this application.

It is noted that a component considered to be "connected to" another component may be directly connected to the other component or may be connected to the other component through an intermediate component. A component considered to be "disposed on" another component may be directly disposed on the other component or may be disposed on the other component through an intermediate component.

When a value is considered to be "equal" to another value, it means that the two values are equal within a preset deviation range of 5%. In other words, when at least one of the two values fluctuates within the preset deviation range, it is still determined that the values are approximately equal even if the values are not exactly equal. When a ratio of one value to another is considered to be "1: 1", it means that the two values are equal within a preset deviation range of 5%. In other words, when at least one of the two values fluctuates within the preset deviation range, it is still determined that the values are approximately equal even if the values are not exactly equal.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein includes any and all combinations of one or more relevant items enumerated. The term "overlap" used herein means partial overlap of the projections of two components or the coincidence of the projections of two components.

An embodiment of this application provides a battery cell. The battery cell includes an electrode assembly, a tab, and a packaging pouch. The tab is connected to one side of the electrode assembly along a first direction. The packaging pouch includes a main portion and a sealing portion. The electrode assembly is disposed in the main portion. The main portion includes a top wall as well as a first wall and a second wall that are connected to two sides of the top wall respectively along a second direction. The sealing portion includes a top seal edge and a side seal edge. The tab extends out from the top seal edge. The side seal edge is connected to the first wall. The packaging pouch is formed by folding and hermetically securing a packaging film along the second wall. Along the second direction, a spacing between the electrode assembly and the first wall is W1, and a spacing between the electrode assembly and the second wall is W2, satisfying |W1 - W2| ≤ 30 µm. The third direction is a thickness direction of the electrode assembly. The first direction, the second direction, and the third direction are perpendicular to each other.

In the above battery cell, along the second direction, the spacing between the electrode assembly and the first wall is W1, and the spacing between the electrode assembly and the second wall is W2, satisfying |W1 - W2| ≤ 30 µm, thereby reducing the risk of uneven stress on two sides of the packaging pouch caused by an excessive offset of the electrode assembly toward the first wall or second wall in the second direction, and consequently reducing the risk of damaging the more intensely stressed side of the packaging pouch as squeezed by the electrode assembly, and improving the safety performance of the battery cell.

The following further describes the embodiments of this application with reference to drawings.

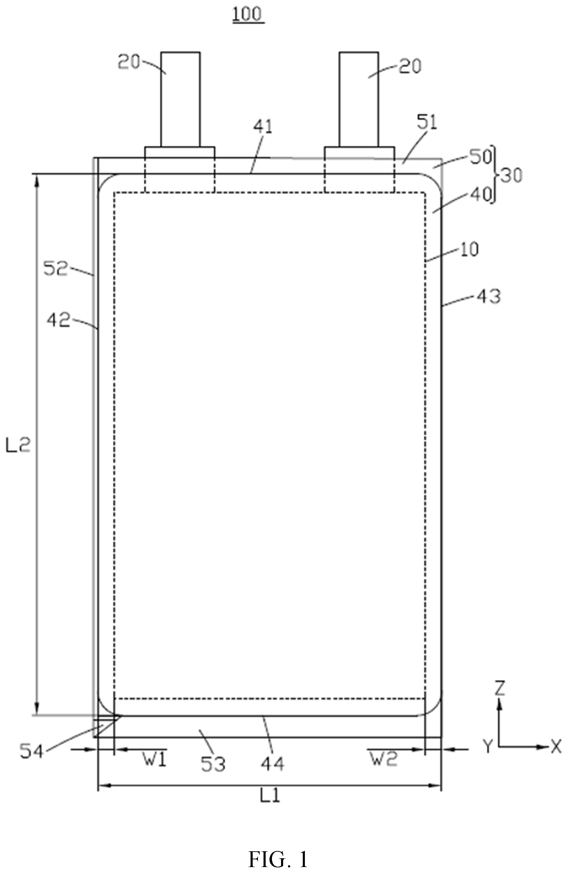

Referring to FIG. 1, an embodiment of this application provides a battery cell 100. The battery cell 100 is applicable to a secondary battery. The secondary battery is a battery that is reusable through activation of an active material in the battery by charging the battery that is discharged.

The battery cell 100 includes an electrode assembly 10, a tab 20, and a packaging pouch 30. The electrode assembly 10 is configured to convert chemical energy into electrical energy. The electrode assembly 10 is formed by winding or stacking a positive electrode plate, a separator, and a negative electrode plate that are arranged in sequence. The tab 20 is connected to one side of the electrode assembly 10 along a first direction Z. An end, away from the electrode assembly 10, of the tab 20 is configured to be connected to an external circuit. The external circuit may be, but is not limited to, a protective circuit module or a mainboard.

The packaging pouch 30 includes a main portion 40 and a sealing portion 50. Specifically, the main portion 40 means a cavity part of the packaging film 30A. The sealing portion 50 means a joint part at which the packaging film 30A is folded. The electrode assembly 10 is disposed in the main portion 40, and the sealing portion 50 is configured to hermetically seal the main portion 40.

The main portion 40 includes a top wall 41 as well as a first wall 42 and a second wall 43 that are connected to two sides of the top wall 41 respectively along a second direction X. The second direction X is perpendicular to the first direction Z, and the second direction X is a width direction of the electrode assembly 10.

The sealing portion 50 includes a top seal edge 51 and a side seal edge 52. The tab 20 extends out from the top seal edge 51. The side seal edge 52 is connected to the first wall 42. The packaging pouch 30 is formed by folding and hermetically securing a packaging film 30A along the second wall 43. The second wall 43, at which the folding occurs, provides a suitable folding margin, so that the second wall 43 forms a surface that includes no seal edge, thereby increasing the energy density of the battery cell 100.

Along the second direction X, the spacing between the electrode assembly 10 and the first wall 42 is W1, and the spacing between the electrode assembly 10 and the second wall 43 is W2, satisfying |W1 - W2| ≤ 30 µm, thereby reducing the risk of uneven stress on two sides of the packaging pouch 30 caused by an excessive offset of the electrode assembly 10 toward the first wall 42 or second wall 43 in the second direction X, and consequently reducing the risk of damaging the more intensely stressed side of the packaging pouch 30 as squeezed by the electrode assembly 10, and improving the safety performance of the battery cell 100.

Optionally, |W1-W2| may be 0, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, or any other value falling within the range of |W1-W2| ≤ 30 µm.

It is noted that when |W1-W2| = 0, W1 is equal to W2, and along the second direction X, the electrode assembly 10 is centrally located between the first wall 42 and the second wall 43, thereby ensuring that the two sides of the packaging pouch 30 are stressed evenly.

Further, the spacings satisfy |W1 - W2| ≤ 20 µm, so as to further reduce the risk of uneven stress on two sides of the packaging pouch 30 caused by the excessive offset of the electrode assembly 10 toward the first wall 42 or the second wall 43 in the second direction X. This further reduces the risk of damaging one side of the packaging pouch 30 as squeezed by the electrode assembly 10, and further improves the safety performance of the battery cell 100.

It is noted that the measurement methods for W1 and W2 are not limited. Optionally, the target spacing may be measured using tools such as vernier calipers or a measuring tape. When there is more than one measurement result for the spacing between the electrode assembly 10 and the first wall 42 along the second direction X, the smaller one is applied. Similarly, when there is more than one measurement result for the spacing between the electrode assembly 10 and the second wall 43 along the second direction X, the smaller one is applied.

Still referring to FIG. 1, in some embodiments, the main portion 40 further includes a bottom wall 44. The bottom wall 44 is disposed opposite to the top wall 41 along a first direction Z. The top wall 41, the first wall 42, the bottom wall 44, and the second wall 43 are sequentially connected to define a space for accommodating the electrode assembly 10.

The spacing between the first wall 42 and the second wall 43 along the second direction X is L1, and the spacing between the top wall 41 and the bottom wall 44 along the first direction Z is L2, satisfying L2/L1 > 1, indicating that the extension lengths of the first wall 42 and the second wall 43 along the first direction Z are greater than the extension lengths of the top wall 41 and the bottom wall 44 along the second direction X. By selecting the side with a longer extension length of the main portion 40 as a fold surface without a seal edge, this application can reduce the space occupied by the whole sealing portion 50, thereby increasing the energy density of the battery cell 100.

In some embodiments, a third direction Y is defined as a thickness direction of the electrode assembly 10. The third direction Y, the first direction Z, and the second direction X are perpendicular to each other. Along the third direction Y, the thickness of the battery cell 100 is H, satisfying H ≤ 3 mm, so as to meet the dimension requirements of an ultrathin battery. Generally, an ultrathin battery cell does not bend at two seal edges in the width direction of the battery cell, so as to prevent the seal edge from exceeding the thickness of the ultrathin cell. Therefore, the space occupied by the two seal edges of the ultrathin cell in the width direction exerts a great impact on the energy density of the battery cell. By letting one side of the ultrathin cell in the width direction be a folded surface without a seal edge, this application increases the energy density of the ultrathin battery cell.

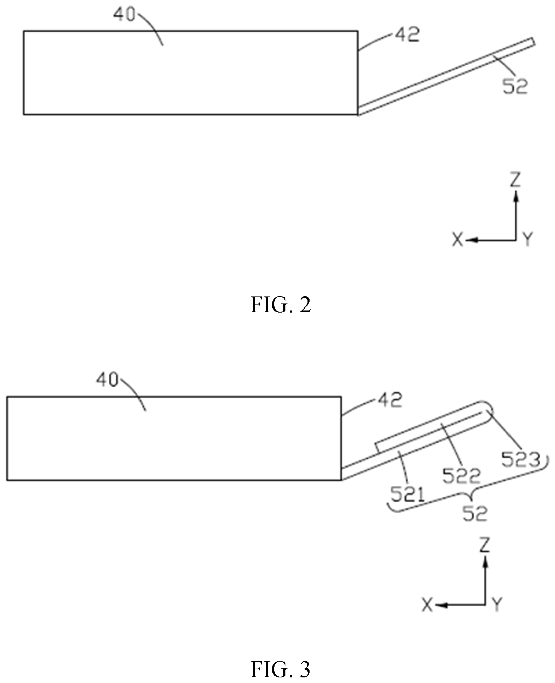

Referring to FIG. 2, in some embodiments, along the third direction Y, the side seal edge 52 does not extend beyond the main portion 40, so as to reduce the space waste caused by the side seal edge 52 protruding beyond the main portion 40 in the third direction Y, and increase the energy density of the battery cell 100.

Optionally, the side seal edge 52 extends along the second direction X or the side seal edge 52 extends obliquely relative to the first wall 42.

Referring to FIG. 3, in some embodiments, the side seal edge 52 forms a single-fold structure after being folded once. The side seal edge 52 includes a first segment 521, a second segment 522, and a first bent segment 523 connected between the first segment 521 and the second segment 522. An end, away from the first bent segment 523, of the first segment 521 is connected to the first wall 42. The second segment 522 and at least a part of the first segment 521 are stacked up along the thickness direction of the side seal edge 52, so as to reduce the space occupied by the side seal edge 52 in the second direction X and increase the sealing area of the side seal edge 52, thereby increasing the energy density and sealing strength of the battery cell 100.

Optionally, the first segment 521 extends along the second direction X or the first segment 521 extends obliquely relative to the first wall 42.

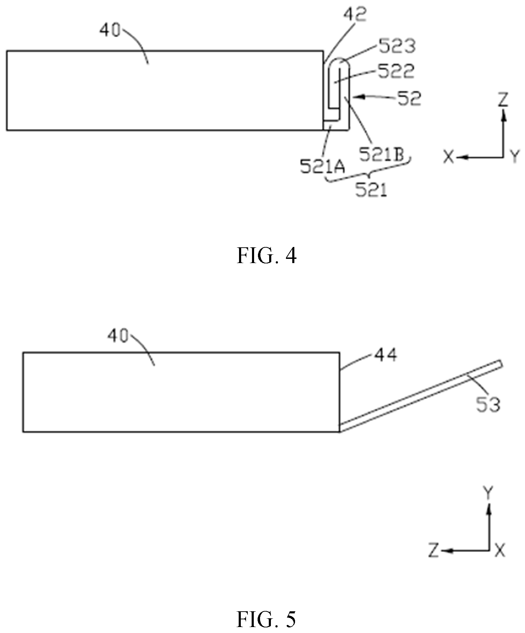

Referring to FIG. 4, in some embodiments, the side seal edge 52 forms a double-fold structure after being folded twice. The first segment 521 includes a first extension segment 521A and a second extension segment 521B. The first extension segment 521A is connected between the first wall 42 and the second extension segment 521B. The first wall 42, the second segment 522, and the second extension segment 521B are arranged sequentially along the second direction X. The second segment 522 and the second extension segment 521B are stacked up along the thickness direction of the side seal edge 52, so as to further reduce the space occupied by the side seal edge 52 in the second direction X and increase the sealing area of the side seal edge 52, thereby further increasing the energy density and sealing strength of the battery cell 100.

Referring to FIG. 1 and FIG. 5 together, in some embodiments, the sealing portion 50 further includes a bottom seal edge 53. The bottom seal edge 53 is connected to the bottom wall 44. Along the third direction Y, the bottom seal edge 53 does not extend beyond the main portion 40, so as to reduce the space waste caused by the bottom seal edge 53 protruding beyond the main portion 40 in the third direction Y, and increase the energy density of the battery cell 100.

Optionally, the bottom seal edge 53 extends along the first direction Z or the bottom seal edge 53 extends obliquely relative to the bottom wall 44.

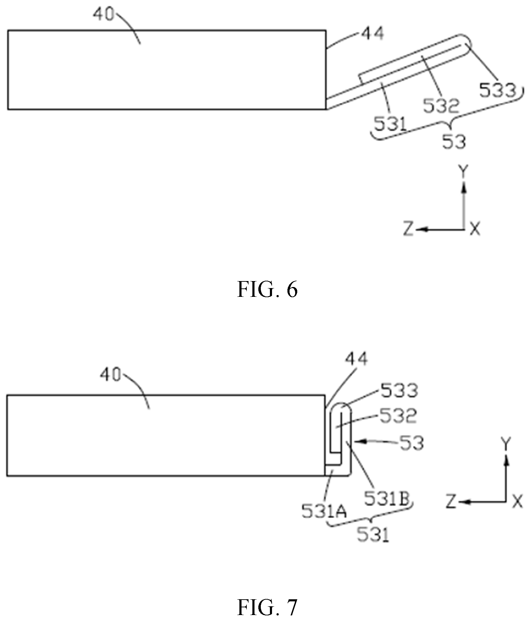

Referring to FIG. 6, in some embodiments, the bottom seal edge 53 forms a single-fold structure after being folded once. The bottom seal edge 53 includes a third segment 531, a fourth segment 532, and a second bent segment 533 connected between the third segment 531 and the fourth segment 532. An end, away from the second bent segment 533, of the third segment 531 is connected to the bottom wall 44. The fourth segment 532 and at least a part of the third segment 531 are stacked up along the thickness direction of the bottom seal edge 53, so as to reduce the space occupied by the bottom seal edge 53 in the first direction Z and increase the sealing area of the bottom seal edge 53, thereby increasing the energy density and sealing strength of the battery cell 100.

Optionally, the third segment 531 extends along the first direction Z or the third segment 531 extends obliquely relative to the bottom wall 44.

Referring to FIG. 7, in some embodiments, the bottom seal edge 53 forms a double-fold structure after being folded twice. The third segment 531 includes a third extension segment 531A and a fourth extension segment 531B. The third extension segment 531A is connected between the bottom wall 44 and the fourth extension segment 531B. The bottom wall 44, the fourth segment 532, and the fourth extension segment 531B are arranged sequentially along the first direction Z. The fourth segment 532 and the fourth extension segment 531B are stacked up along the thickness direction of the bottom seal edge 53, so as to further reduce the space occupied by the bottom seal edge 53 in the first direction Z and increase the sealing area of the bottom seal edge 53, thereby further increasing the energy density and sealing strength of the battery cell 100.

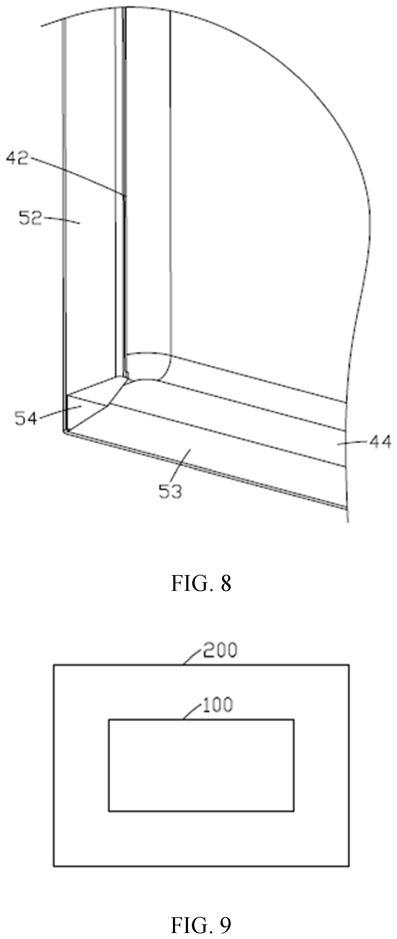

Referring to FIG. 1 and FIG. 8 together, in some embodiments, the sealing portion 50 further includes a folded corner portion 54. The folded corner portion 54 is formed by bending a junction between the side seal edge 52 and the bottom seal edge 53 in the following manners sequentially: first, bending synchronously with the side seal edge 52, and then bending toward the bottom seal edge 53, and finally bending synchronously with the bottom seal edge 53. This arrangement reduces the risk of stress concentration in the folded corner portion 54 at the junction between the side seal edge 52 and the bottom seal edge 53, thereby improving the structural strength and sealing strength at the corner of the battery cell 100.

Referring to FIG. 9, an embodiment of this application further provides an electronic device 200. The electronic device 200 includes the battery cell 100 disclosed in any one of the above embodiments.

Optionally, the electronic device 200 may be a vehicle, a mobile phone, a portable device, a notebook computer, a ship, a spacecraft, an electric toy, an electric tool, or the like.

In the battery cell 100 and the electronic device 200, along the second direction X, the spacing between the electrode assembly 10 and the first wall 42 is W1, and the spacing between the electrode assembly 10 and the second wall 43 is W2, satisfying |W1 - W2| ≤ 30 µm, thereby reducing the risk of uneven stress on two sides of the packaging pouch 30 caused by an excessive offset of the electrode assembly 10 toward the first wall 42 or second wall 43 in the second direction X, and consequently reducing the risk of damaging the more intensely stressed side of the packaging pouch 30 as squeezed by the electrode assembly 10, and improving the safety performance of the battery cell 100.

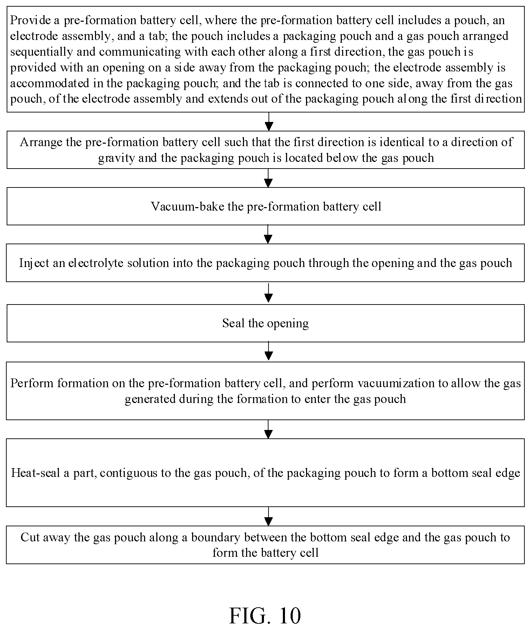

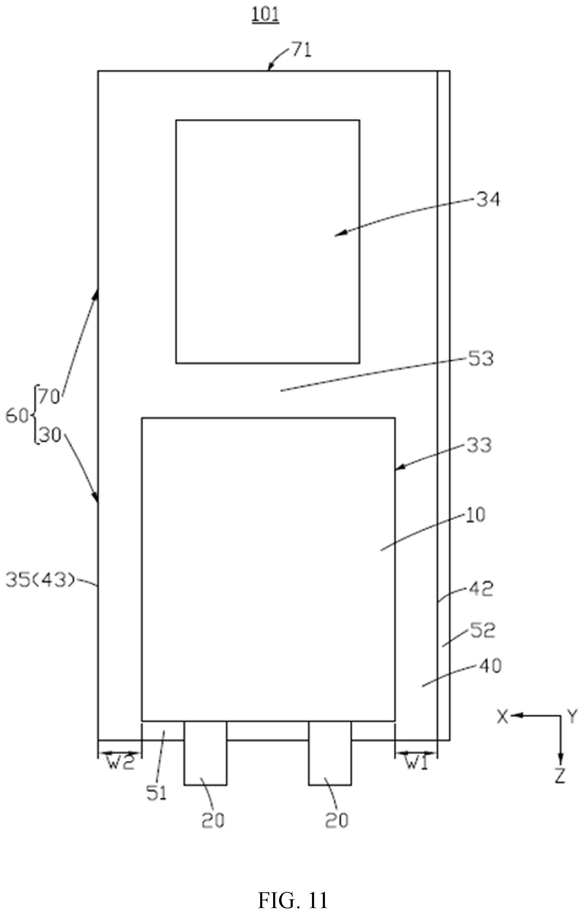

Referring to FIG. 10 and FIG. 11 together, an embodiment of this application further provides a battery cell packaging method. The battery cell packaging method includes the following steps:
providing a pre-formation battery cell 101, where the pre-formation battery cell 101 includes a pouch 60, an electrode assembly 10, and a tab 20; the pouch 60 includes a packaging pouch 30 and a gas pouch 70 arranged sequentially and communicating with each other along a first direction Z, the gas pouch 70 is provided with an opening 71 on a side away from the packaging pouch 30; the electrode assembly 10 is accommodated in the packaging pouch 30; and the tab 20 is connected to one side, away from the gas pouch 70, of the electrode assembly 10 and extends out of the packaging pouch 30 along the first direction Z, where
it is noted that the pouch 60 is made of a packaging film 30A, and a part of the packaging film 30A forms the packaging pouch 30, and another part of the packaging film forms the gas pouch 70;
arranging the pre-formation battery cell 101 such that the first direction Z is identical to a direction of gravity and the packaging pouch 30 is located below the gas pouch 70 to exhaust the gas in the packaging pouch 30 upward to the gas pouch 70, where
it is noted that the pre-formation battery cell 101 is fixed by a fixture or another fixing unit, and the orientation of the pre-formation battery cell 101 remains unchanged in subsequent steps;
vacuum-baking the pre-formation battery cell 101 so that the moisture in the packaging pouch 30 is expelled through the opening 71 after evaporating;
injecting an electrolyte solution into the packaging pouch 30 through the opening 71;
sealing the opening 71 to allow the gas generated during formation in the packaging pouch 30 to enter the gas pouch 70;
performing formation on the pre-formation battery cell 101, and performing vacuumization to allow the gas generated during the formation to enter the gas pouch 70;
heat-sealing a part, contiguous to the gas pouch 70, of the packaging pouch 30 to form a bottom seal edge 53; and
cutting away the gas pouch 70 along a boundary between the bottom seal edge 53 and the gas pouch 70 to form the battery cell 100 disclosed in the above embodiment.

In the battery cell packaging method, the tab 20 is connected to a side, away from the gas pouch 70, of the electrode assembly 10 and extends out of the packaging pouch 30 along the first direction Z. In placing the pre-formation battery cell 101, the first direction Z is the same as the direction of gravity, thereby reducing the risk of uneven stress on the two sides of the packaging pouch 30 caused by an excessive offset of the electrode assembly 10 toward one side of the packaging pouch 30 in the second direction X, reducing the risk of damaging the more intensely stressed side of the packaging pouch 30 as squeezed by the electrode assembly 10, and improving the safety performance of the battery cell 100.

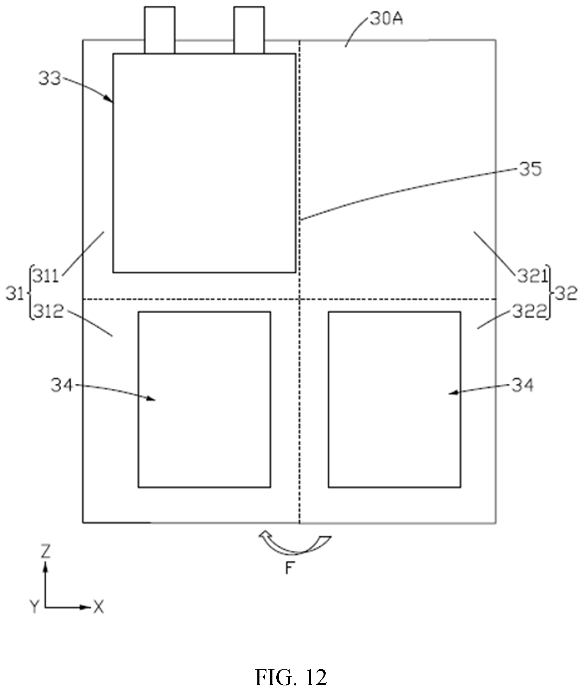

Referring to FIG. 11 and FIG. 12 together, in some embodiments, the battery cell packaging method further includes the following steps:
spreading out the packaging film 30A, where the packaging film 30A includes a first packaging region 31 and a second packaging region 32 arranged along the second direction X, the first packaging region 31 includes a first region 311 and a second region 312 arranged along the first direction Z, and the second packaging region 32 includes a third region 321 and a fourth region 322 arranged along the first direction Z;
stamp-forming the spread-out packaging film 30A, where at least one of the first region 311 or the third region 321 is provided with a cavity region 33 for accommodating the electrode assembly 10, and the second region 312 and the fourth region 322 are provided with a gas pouch cavity 34 for accommodating the gas generated during formation;
placing the electrode assembly 10 in one cavity region 33, where the tab 20 is connected to one side, away from the second region 312 and the fourth region 322, of the electrode assembly 10, and the tab 20 extends out along the first direction Z;
folding, among the first packaging region 31 and the second packaging region 32, the one not accommodating the electrode assembly 10 toward the other along a fold edge 35 (the folding direction F is shown in FIG. 12) to form the pouch 60, where the first region 311 and the third region 321 overlap to form the packaging pouch 30, the second region 312 and the fourth region 322 overlap to form the gas pouch 70, and a part, corresponding to the packaging pouch 30, of the fold edge 35, forms the second wall 43;
heat-sealing the packaging pouch 30 on a side opposite to the fold edge 35 along the second direction X to form a side seal edge 52 on this side of the packaging pouch 30;
heat-sealing the packaging pouch 30 on a side from which the tab 20 extends out, so as to form a top seal edge 51 on this side of the packaging pouch 30; and
providing an opening 71 of the gas pouch 70 on a side away from the packaging pouch 30, where the packaging film 30A, the electrode assembly 10, and the tab 20 form the pre-formation battery cell 101.

In some embodiments, the packaging pouch 30 includes a main portion 40 configured to accommodate the electrode assembly 10. The side seal edge 52 is connected to the main portion 40 along the second direction X.

Still referring to FIG. 3, in some embodiments, the battery cell packaging method further includes the following step: folding the side seal edge 52 such that the side seal edge 52 includes a first segment 521, a second segment 522, and a first bent segment 523 connected between the first segment 521 and the second segment 522. An end, away from the first bent segment 523, of the first segment 521 is connected to the main portion 40. The second segment 522 and at least a part of the first segment 521 are stacked up along the thickness direction of the side seal edge 52.

Folding the side seal edge 52 can reduce the space occupied by the side seal edge 52 in the second direction X and increase the sealing area of the side seal edge 52, thereby increasing the energy density and sealing strength of the battery cell 100.

Still referring to FIG. 4, in some embodiments, the battery cell packaging method further includes the following step: folding the first segment 521 so that the first segment 521 includes a first extension segment 521A and a second extension segment 521B. The first extension segment 521A is connected between the main portion 40 and the second extension segment 521B. The main portion 40, the second segment 522, and the second extension segment 521B are arranged sequentially along the second direction X. The second segment 522 and the second extension segment 521B are stacked up along the thickness direction of the side seal edge 52.

Folding the first segment 521 can further reduce the space occupied by the side seal edge 52 in the second direction X and increase the sealing area of the side seal edge 52, thereby further increasing the energy density and sealing strength of the battery cell 100.

Still referring to FIG. 6, in some embodiments, the battery cell packaging method further includes the following step: folding the bottom seal edge 53 such that the bottom seal edge 53 includes a third segment 531, a fourth segment 532, and a second bent segment 533 connected between the third segment 531 and the fourth segment 532. An end, away from the second bent segment 533, of the third segment 531 is connected to the main portion 40. The fourth segment 532 and at least a part of the third segment 531 are stacked up along the thickness direction of the bottom seal edge 53.

Folding the bottom seal edge 53 can reduce the space occupied by the bottom seal edge 53 in the first direction Z and increase the sealing area of the bottom seal edge 53, thereby increasing the energy density and sealing strength of the battery cell 100.

Still referring to FIG. 7, in some embodiments, the battery cell packaging method further includes the following step: folding the third segment 531 so that the third segment 531 includes a third extension segment 531A and a fourth extension segment 531B. The third extension segment 531A is connected between the main portion 40 and the fourth extension segment 531B. The main portion 40, the fourth segment 532, and the fourth extension segment 531B are arranged sequentially along the first direction Z. The fourth segment 532 and the fourth extension segment 531B are stacked up along the thickness direction of the bottom seal edge 53.

Folding the third segment 531 can further reduce the space occupied by the bottom seal edge 53 in the first direction Z and increase the sealing area of the bottom seal edge 53, thereby further increasing the energy density and sealing strength of the battery cell 100.

The embodiments described above are merely some specific embodiments of this application, but the protection scope of this application is not limited to such embodiments. Any variations or replacements made without departing from the technical solutions disclosed herein still fall within the disclosure scope of this application.

## Claims

1. A battery cell, **characterized in that** the battery cell comprises:
an electrode assembly;
a tab, connected to one side of the electrode assembly along a first direction; and
a packaging pouch, wherein the packaging pouch comprises a main portion and a sealing portion; the electrode assembly is disposed in the main portion; the main portion comprises a top wall as well as a first wall and a second wall that are connected to two sides of the top wall respectively along a second direction; the sealing portion comprises a top seal edge and a side seal edge; the tab extends out from the top seal edge; the side seal edge is connected to the first wall; the packaging pouch is formed by folding and hermetically securing a packaging film along the second wall; along the second direction, a spacing between the electrode assembly and the first wall is W1, and a spacing between the electrode assembly and the second wall is W2, |W1 - W2| ≤ 30 µm; and
the third direction is a thickness direction of the electrode assembly, the first direction, the second direction, and the third direction are perpendicular to each other.

2. The battery cell according to claim 1, **characterized in that** |W1 - W2|≤ 20 µm.

3. The battery cell according to claim 1, **characterized in that** the main portion further comprises a bottom wall; the bottom wall and the top wall are disposed opposite to each other along the first direction; the top wall, the first wall, the bottom wall, and the second wall are sequentially connected to define a space for accommodating the electrode assembly; and
a spacing between the first wall and the second wall along the second direction is L1, and a spacing between the top wall and the bottom wall along the first direction is L2, and L2/L1 > 1.

4. The battery cell according to claim 1, **characterized in that** along the third direction, a thickness of the battery cell is H, wherein H ≤ 3 mm.

5. The battery cell according to claim 1, **characterized in that** along the third direction, the side seal edge does not extend beyond the main portion.

6. The battery cell according to claim 5, **characterized in that** the side seal edge comprises a first segment, a second segment, and a first bent segment connected between the first segment and the second segment; an end of the first segment away from the first bent segment is connected to the first wall; and the second segment and at least a part of the first segment are stacked up along a thickness direction of the side seal edge.

7. The battery cell according to claim 6, **characterized in that** the first segment comprises a first extension segment and a second extension segment; the first extension segment is connected between the first wall and the second extension segment; the first wall, the second segment, and the second extension segment are arranged sequentially along the second direction; and the second segment and the second extension segment are stacked up along the thickness direction of the side seal edge.

8. The battery cell according to claim 3, **characterized in that** the sealing portion further comprises a bottom seal edge; the bottom seal edge is connected to the bottom wall; and along the third direction, the bottom seal edge does not extend beyond the main portion.

9. The battery cell according to claim 8, **characterized in that** the bottom seal edge comprises a third segment, a fourth segment, and a second bent segment connected between the third segment and the fourth segment; an end of the third segment away from the second bent segment is connected to the bottom wall; and the fourth segment and at least a part of the third segment are stacked up along a thickness direction of the bottom seal edge.

10. The battery cell according to claim 9, **characterized in that** the third segment comprises a third extension segment and a fourth extension segment; the third extension segment is connected between the bottom wall and the fourth extension segment; the bottom wall, the fourth segment, and the fourth extension segment are arranged sequentially along the first direction; and the fourth segment and the fourth extension segment are stacked up along the thickness direction of the bottom seal edge.

11. An electronic device, **characterized in that** the electronic device comprises the battery cell according to any one of claims 1 to 10.

12. A battery cell packaging method, **characterized in that** the battery cell packaging method comprises following steps:
providing a pre-formation battery cell, wherein the pre-formation battery cell comprises a pouch, an electrode assembly, and a tab; the pouch comprises a packaging pouch and a gas pouch arranged sequentially and communicating with each other along a first direction; the gas pouch is provided with an opening on a side away from the packaging pouch; the electrode assembly is accommodated in the packaging pouch; and the tab is connected to one side of the electrode assembly away from the gas pouch, and extends out of the packaging pouch along the first direction;
arranging the pre-formation battery cell such that the first direction is identical to a direction of gravity and the packaging pouch is located below the gas pouch;
vacuum-baking the pre-formation battery cell;
injecting an electrolyte solution into the packaging pouch (30) through the opening;
sealing the opening;
performing formation on the pre-formation battery cell, and performing vacuumization to allow the gas generated during the formation to enter the gas pouch;
heat-sealing a part, contiguous to the gas pouch, of the packaging pouch to form a bottom seal edge; and
cutting away the gas pouch along a boundary between the bottom seal edge and the gas pouch to form the battery cell according to claim 1.

13. The battery cell packaging method according to claim 12, **characterized in that** the battery cell packaging method further comprises the following steps:
spreading out the packaging film, wherein the packaging film comprises a first packaging region and a second packaging region arranged along the second direction; the first packaging region comprises a first region and a second region arranged along the first direction; and the second packaging region comprises a third region and a fourth region arranged along the first direction;
stamp-forming the spread-out packaging film, wherein at least one of the first region or the third region is provided with a cavity region for accommodating the electrode assembly; and the second region and the fourth region are provided with a gas pouch cavity for accommodating the gas generated during formation;
placing the electrode assembly in one cavity region, wherein the tab is connected to one side, away from the second region and the fourth region, of the electrode assembly; and the tab extends out along the first direction;
folding, among the first packaging region and the second packaging region, the one not accommodating the electrode assembly toward the other along a fold edge to form the pouch; wherein the first region and the third region overlap to form the packaging pouch; the second region and the fourth region overlap to form the gas pouch; a part, corresponding to the packaging pouch, of the fold edge, forms the second wall;
heat-sealing the packaging pouch on a side opposite to the fold edge along the second direction to form a side seal edge on this side of the packaging pouch;
heat-sealing the packaging pouch on a side from which the tab extends out, so as to form a top seal edge on this side of the packaging pouch; and
providing an opening of the gas pouch on a side away from the packaging pouch, wherein the packaging film, the electrode assembly, and the tab form the pre-formation battery cell.

14. The battery cell packaging method according to claim 13, **characterized in that** the packaging pouch comprises a main portion configured to accommodate the electrode assembly; and the side seal edge is connected to the main portion along the second direction; and
the battery cell packaging method further comprises the following steps: folding the side seal edge so that the side seal edge comprises a first segment, a second segment, and a first bent segment connected between the first segment and the second segment; an end, away from the first bent segment, of the first segment is connected to the main portion; and the second segment and at least a part of the first segment are stacked up along a thickness direction of the side seal edge.

15. The battery cell packaging method according to claim 14, **characterized in that** the battery cell packaging method further comprises the following steps: folding the first segment so that the first segment comprises a first extension segment and a second extension segment; the first extension segment is connected between the main portion and the second extension segment; the main portion, the second segment, and the second extension segment are arranged sequentially along the second direction; and the second segment and the second extension segment are stacked up along the thickness direction of the side seal edge.

16. The battery cell packaging method according to claim 12, **characterized in that** the packaging pouch comprises a main portion configured to accommodate the electrode assembly, and the bottom seal edge is connected to the main portion along the first direction; and
the battery cell packaging method further comprises the following steps: folding the bottom seal edge so that the bottom seal edge comprises a third segment, a fourth segment, and a second bent segment connected between the third segment and the fourth segment; an end, away from the second bent segment, of the third segment is connected to the main portion; and the fourth segment and at least a part of the third segment are stacked up along a thickness direction of the bottom seal edge.

17. The battery cell packaging method according to claim 16, **characterized in that** the battery cell packaging method further comprises the following steps: folding the third segment so that the third segment comprises a third extension segment and a fourth extension segment; the third extension segment is connected between the main portion and the fourth extension segment; the main portion, the fourth segment, and the fourth extension segment are arranged sequentially along the first direction; and the fourth segment and the fourth extension segment are stacked up along the thickness direction of the bottom seal edge.
